# EUROPEAN PATENT APPLICATION

(11) **EP 4 668 204 A1**
(43) Date of publication of application: **24.12.2025**
(21) Application number: 24780316.6
(22) Date of filing: 26.03.2024
(51) Int. Cl.: G06Q 50/16

(54) **ASSOCIATION INFORMATION GENERATION EQUIPMENT, SYSTEM, METHOD, AND PROGRAM**

(30) Priority: 31.03.2023 JP 2023059605
(71) Applicant: Daikin Industries, Ltd., Osaka-shi, Osaka 530-0001 (JP)
(72) Inventor: TERASHITA, Kurumi, Osaka-Shi, Osaka 530-0001 (JP)
(74) Representative: Goddar, Heinz J.
(86) International application number: PCT/JP2024/011961
(87) International publication number: WO 2024/204206

(57) **Abstract**

To facilitate automatic configuration of devices in building management system. An association information generation apparatus according to an embodiment of the present disclosure includes a controller configured to generate association information in an information building management system. The controller is configured to: acquire a description relating to a device data point of a first device from a communication specification of the first device; acquire a description relating to a device data point of a second device from a communication specification of the second device; extract a common data point common to a plurality of devices, the plurality of devices being the first device and the second device, based on whether the description of the device data point of the first device and the description of the device data point of the second device are similar to each other; and generate information that associates the device data points of the plurality of devices with each other.

## Description

### TECHNICAL FIELD

The present disclosure relates to an association information generation apparatus, system, method, and program.

### BACKGROUND ART

Conventionally, a building management system (BMS) that collectively manages devices such as air conditioners and lighting equipment in a building is known. A building manager uses the building management system to monitor and control the devices through an open network communication such as BACnet (registered trademark). In order to collectively monitor and control various devices, it is necessary to select data points (for example, objects of BACnet and the like) common to the devices and set the data points in the building management system when the building management system is installed.

### RELATED-ART DOCUMENTS

### PATENT DOCUMENTS

Patent Document 1: Japanese Laid-open Patent Publication No. 2010-231638

### SUMMARY OF THE INVENTION

### PROBLEM TO BE SOLVED BY THE INVENTION

However, because the content of data points in BACnet communication specifications or the like of each device is freely described without any description rules (that is, various terms and sentences are used depending on the manufacturer and the model of a device), it is not easy to automatically identify data points common to devices.

An object of the present disclosure is to facilitate automatic configuration of devices in a building management system.

### MEANS TO SOLVE THE PROBLEM

A first aspect of the present disclosure is an association information generation apparatus including:
a controller configured to generate association information in an information building management system, wherein
the controller is configured to:
   acquire a description relating to a device data point of a first device from a communication specification of the first device;
   acquire a description relating to a device data point of a second device from a communication specification of the second device;
   extract a common data point common to a plurality of devices, the plurality of devices being the first device and the second device, based on whether the description of the device data point of the first device and the description of the device data point of the second device are similar to each other; and
   generate information that associates the device data points of the plurality of devices with each other.

According to the first aspect of the present disclosure, devices can be configured easily in the building management system.

A second aspect of the present disclosure is the association information generation apparatus according to the first aspect, wherein the controller is configured to generate a description relating to the common data point, and generate the information that associates the device data points of the plurality of devices with each other.

According to the second aspect of the present disclosure, the common data point and each of the device data points of the plurality of devices in the building management system can be associated with each other.

A third aspect of the present disclosure is the association information generation apparatus according to the first aspect or the second aspect, wherein
the description relating to the device data point includes a name of the data point, and
the controller is configured to extract the common data point based on a similarity between a name of the device data point of the first device and a name of the device data point of the second device.

According to the third aspect of the present disclosure, the device data points whose names are similar to each other can be set as the common data point.

A fourth aspect of the present disclosure is the association information generation apparatus according to any one of the first aspect to the third aspect, wherein
the description relating to the device data point includes an explanation of a definition of the data point, and
the controller is configured to extract the common data point based on a similarity between an explanation of a definition of the device data point of the first device and an explanation of a definition of the device data point of the second device.

According to the fourth aspect of the present disclosure, the device data points whose explanations of the definitions are similar to each other can be set as the common data point.

A fifth aspect of the present disclosure is the association information generation apparatus according to any one of the first aspect to the fourth aspect, wherein the controller is configured to display the common data point on a user terminal or the association information generation apparatus, and receive an instruction to determine the common data point from a user.

According to the fifth aspect of the present disclosure, after the user confirms the extracted common data point, the user can determine the common data point.

A sixth aspect of the present disclosure is the association information generation apparatus according to any one of the first aspect to the fifth aspect, wherein the controller is configured to receive an instruction to output the common data point from the user, and output the common data point.

According to the sixth aspect of the present disclosure, the user can acquire the extracted common data point.

A seventh aspect of the present disclosure is the association information generation apparatus according to any one of the first aspect to the sixth aspect, wherein
the description relating to the device data point includes permission to read or write, or a unit of, the data point, and
the controller is configured to extract the common data point based on a similarity between permission to read or write, or a unit of, the device data point of the first device and permission to read or write, or a unit of, the device data point of the second device.

According to the seventh aspect of the present disclosure, the device data points whose permissions to read or write or whose units are similar to each other can be set as the common data point.

An eighth aspect of the present disclosure is the association information generation apparatus according to any one of the first aspect to the seventh aspect, wherein the controller is configured to output or store, in a database, information that associates the common data point and each of the device data points of the plurality of devices with each other.

According to the eighth aspect of the present disclosure, another user can use the association information.

A ninth aspect of the present disclosure is the association information generation apparatus according to the first aspect, wherein
the controller is configured to
acquire a description relating to the common data point,
acquire a description relating to a device data point of a third device from a communication specification of the third device, and
generate information that associates the common data point and the device data point of the third device with each other based on whether the description relating to the common data point and the description relating to the device data point of the third device are similar to each other.

According to the ninth aspect of the present disclosure, in a case where a new device is added to the building management system, the new device can be easily configured.

A tenth aspect of the present disclosure is the association information generation apparatus according to the ninth aspect, wherein the controller is configured to generate the information that associates the common data point and the device data point of the third device with each other based on a similarity between a name of the common data point and a name of the device data point of the third device.

According to the tenth aspect of the present disclosure, the device data point of the third device, having the name similar to that of the common data point, can be associated with the common data point.

An eleventh aspect of the present disclosure is the association information generation apparatus according to the ninth aspect or the tenth aspect, wherein the controller is configured to generate the information that associates the common data point and the device data point of the third device with each other based on a similarity between an explanation of a definition of the common data point and an explanation of a definition of the device data point of the third device.

According to the eleventh aspect of the present disclosure, the device data point of the third device, having the explanation of the definition similar to that of the common data point, can be associated with the common data point.

A twelfth aspect of the present disclosure is the association information generation apparatus according to any one of the ninth aspect to the eleventh aspect, wherein the controller is configured to output the common data point.

According to the twelfth aspect of the present disclosure, the common data point associated with the device data point of the third device can be acquired.

A thirteenth aspect of the present disclosure is the association information generation apparatus according to any one of the ninth aspect to the twelfth aspect, wherein the controller is configured to generate the information that associates the common data point and the device data point of the third device with each other based on a similarity between permission to read or write, or a unit of, the common data point and permission to read or write, or a unit of, the device data point of the third device.

According to the thirteenth aspect of the present disclosure, the device data point of the third device, having the permission to read or write or the unit similar to that of the common data point, can be associated with the common data point.

A fourteenth aspect of the present disclosure is the association information generation apparatus according to any one of the ninth aspect to the thirteenth aspect, wherein the controller is configured to output or store, in a database, the information that associates the common data point and the device data point of the third device with each other.

According to the fourteenth aspect of the present disclosure, another user can use the association information.

A fifteenth aspect of the present disclosure is a system including:
an association information generation apparatus including a controller configured to generate association information in a building management system; and
a user terminal, wherein
the controller of the association information generation apparatus is configured to
   acquire a description relating to a device data point of a first device from a communication specification of the first device;
   acquire a description relating to a device data point of a second device from a communication specification of the second device;
   extract a common data point common to a plurality of devices, the plurality of devices being the first device and the second device, based on whether the description of the device data point of the first device and the description of the device data point of the second device are similar to each other; and
   generate information that associates the device data points of the plurality of devices with each other.

A sixteenth aspect of the present disclosure is a method executed by an association information generation apparatus configured to generate association information in a building management system, the method including:
a step of acquiring a description relating to a device data point of a first device from a communication specification of the first device;
a step of acquiring a description relating to a device data point of a second device from a communication specification of the second device;
a step of extracting a common data point common to a plurality of devices, the plurality of devices being the first device and the second device, based on whether the description of the device data point of the first device and the description of the device data point of the second device are similar to each other; and
a step of generating information that associates the device data points of the plurality of devices with each other.

A seventeenth aspect of the present disclosure is a program for causing an association information generation apparatus configured to generate association information in a building management system to execute a process including:
acquiring a description relating to a device data point of a first device from a communication specification of the first device;
acquiring a description relating to a device data point of a second device from a communication specification of the second device;
extracting a common data point common to a plurality of devices, the plurality of devices being the first device and the second device, based on whether the description of the device data point of the first device and the description of the device data point of the second device are similar to each other; and
generating information that associates the device data points of the plurality of devices with each other.

### BRIEF DESCRIPTION OF THE DRAWINGS

[FIG. 1] FIG. 1 is a diagram illustrating an overall configuration according to an embodiment of the present disclosure;
[FIG. 2] FIG. 2 is a diagram illustrating a hardware configuration of an association information generation apparatus according to an embodiment of the present disclosure;
[FIG. 3] FIG. 3 is a diagram illustrating functional blocks of a controller of the association information generation apparatus according to an embodiment of the present disclosure;
[FIG. 4] FIG. 4 is an example of a communication specification of a device according to an embodiment of the present disclosure;
[FIG. 5] FIG. 5 is a diagram illustrating the determination of a similarity between explanations of definitions of device data points according to an embodiment of the present disclosure;
[FIG. 6] FIG. 6 is a diagram illustrating the determination of a similarity between permissions to read or write device data points according to an embodiment of the present disclosure;
[FIG. 7] FIG. 7 is an example of association information between device data points of a plurality of devices according to an embodiment of the present disclosure;
[FIG. 8] FIG. 8 is an example of descriptions relating to common data points according to an embodiment of the present disclosure;
[FIG. 9] FIG. 9 is a diagram illustrating the determination of a similarity between the name of a common data point and the name of a device data point according to an embodiment of the present disclosure;
[FIG. 10] FIG. 10 is a diagram illustrating the determination of a similarity between an explanation of a definition of a common data point and an explanation of a definition of a device data point according to an embodiment of the present disclosure;
[FIG. 11] FIG. 11 is an example of association information between a common data point and a device data point according to an embodiment of the present disclosure;
[FIG. 12] FIG. 12 is an example of a screen displayed on a user terminal or the association information generation apparatus according to an embodiment of the present disclosure;
[FIG. 13] FIG. 13 is a flowchart of a process of associating device data points of a plurality of devices with each other according to an embodiment of the present disclosure; and
[FIG. 14] FIG. 14 is a flowchart of a process of associating a common data point and a device data point with each other according to an embodiment of the present disclosure.

### MODE FOR CARRYING OUT THE INVENTION

Embodiments of the present disclosure will be described below with reference to the drawings.

### <Description of Terms>

- In the present specification, a "device" is any device that is monitored or controlled by a building management system (BMS). For example, the device is an air conditioner, but is not limited thereto and may be any device.
- In the present specification, a "communication specification" is a document describing specifications when the device uses a communication protocol (for example, a building automation and control networking protocol (BACnet)).
- In the present specification, a "device data point" is a data item of the device (for example, data input into or output from the device, data indicating a state of the device, or the like) that is defined by the communication specification. For example, the device data point is an object of BACnet.
- In the present specification, a "common data point" is a data item that is defined by a specification of the building management system and monitored or controlled by the building management system. The common data point is a data point common to a plurality of devices (for example, a plurality of devices of the same model but different model numbers). Note that, in the present specification, a common data point common to two devices (a first device (device A) and a second device (device A')) will be described, but the common data point may be common to three or more devices.

### <Overall Configuration>

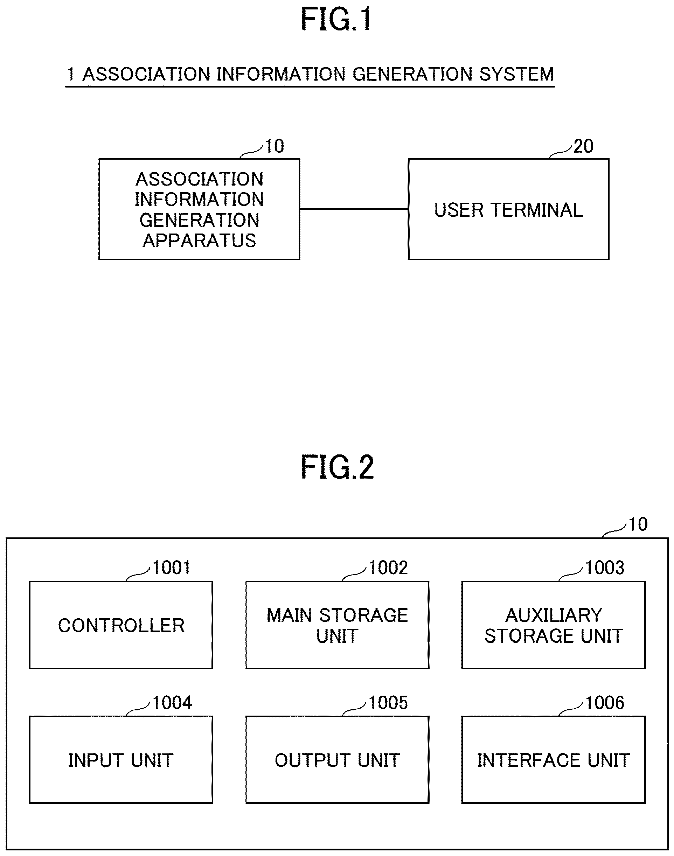

FIG. 1 is a diagram illustrating an overall configuration according to an embodiment of the present disclosure. An association information generation system 1 includes an association information generation apparatus 10 and a user terminal 20. The association information generation apparatus 10 and the user terminal 20 can transmit and receive data to and from each other via any network. Each of the association information generation apparatus 10 and the user terminal 20 will be described below.

### <<Association information Generation Apparatus>>

The association information generation apparatus 10 acquires descriptions relating to device data points of each of a plurality of devices from a communication specification of each of the devices, and associates device data points (for example, a device data point of the first device (device A) and a device data point of the second device (device A')), having similar descriptions, with each other. Further, the association information generation apparatus 10 can associate a common data point common to a plurality of devices with a device data point (for example, a device data point of a third device (device X)). The association information generation apparatus 10 is configured with one or more computers.

### <<User Terminal>>

The user terminal 20 transmits information input by a user to the association information generation apparatus 10, and displays information received from the association information generation apparatus 10 on a display. For example, the user terminal 20 is a personal computer, a tablet, a smartphone, or the like.

### <Hardware Configuration>

FIG. 2 is a diagram illustrating a hardware configuration of the association information generation apparatus 10 according to an embodiment of the present disclosure. The user terminal 20 also has a similar hardware configuration.

The association information generation apparatus 10 can include a controller 1001, a main storage unit 1002, an auxiliary storage unit 1003, an input unit 1004, an output unit 1005, and an interface unit 1006. Each of these units will be described below.

The controller 1001 is a processor (for example, a central processing unit (CPU), a graphics processing unit (GPU), or the like) configured to execute various programs installed in the auxiliary storage unit 1003.

The main storage unit 1002 includes a nonvolatile memory (read only memory (ROM)) and a volatile memory (random access memory (RAM)). The ROM stores various programs, data, and the like necessary for the controller 1001 to execute various programs installed in the auxiliary storage unit 1003. The RAM provides a work area where various programs installed in the auxiliary storage unit 1003 are deployed when being executed by the controller 1001.

The auxiliary storage unit 1003 is an auxiliary storage device configured to store various programs and information used when the various programs are executed.

The input unit 1004 is an input device with which an operator of the association information generation apparatus 10 inputs various instructions into the association information generation apparatus 10.

The output unit 1005 is an output device configured to output an internal state and the like of the association information generation apparatus 10.

The interface unit 1006 is a communication device connected to a network and configured to communicate with another apparatus.

### <Functional Blocks>

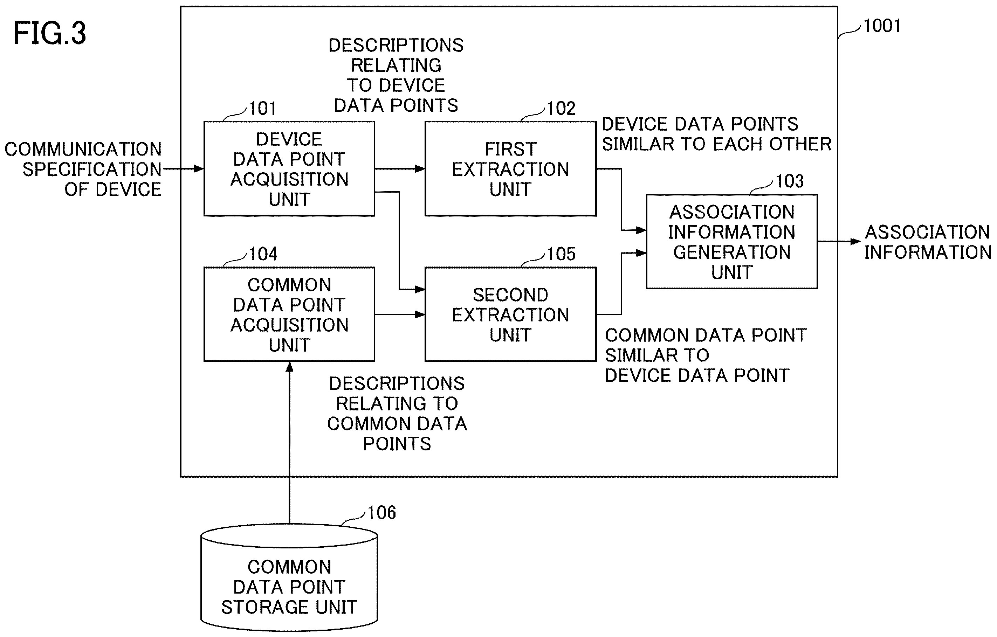

FIG. 3 is a diagram illustrating functional blocks of the controller 1001 according to an embodiment of the present disclosure. The controller 1001 can include a device data point acquisition unit 101, a first extraction unit 102, an association information generation unit 103, a common data point acquisition unit 104, and a second extraction unit 105. The controller 1001 can function as the device data point acquisition unit 101, the first extraction unit 102, the association information generation unit 103, the common data point acquisition unit 104, and the second extraction unit 105 by executing a program.

Hereinafter, a "case of extracting similar device data points from device data points of a plurality of devices" and a "case of extracting a common data point similar to a device data point of a new device" will be described separately.

First, the "case of extracting similar device data points from device data points of a plurality of devices" will be described.

### [Case of Extracting Similar Device Data Points from Device Data Points of Plurality of Devices]

The device data point acquisition unit 101 acquires descriptions relating to device data points of a device from a communication specification of the device.

Specifically, the device data point acquisition unit 101 acquires data of a communication specification of a device (for example, a communication specification converted into digital form if the communication specification is in paper form), and acquires descriptions relating to device data points of the device (for example, the names of the device data points, explanations of definitions of the device data points, permissions to read or write the device data points, units, or the like) from the communication specification.

### [Communication Specification]

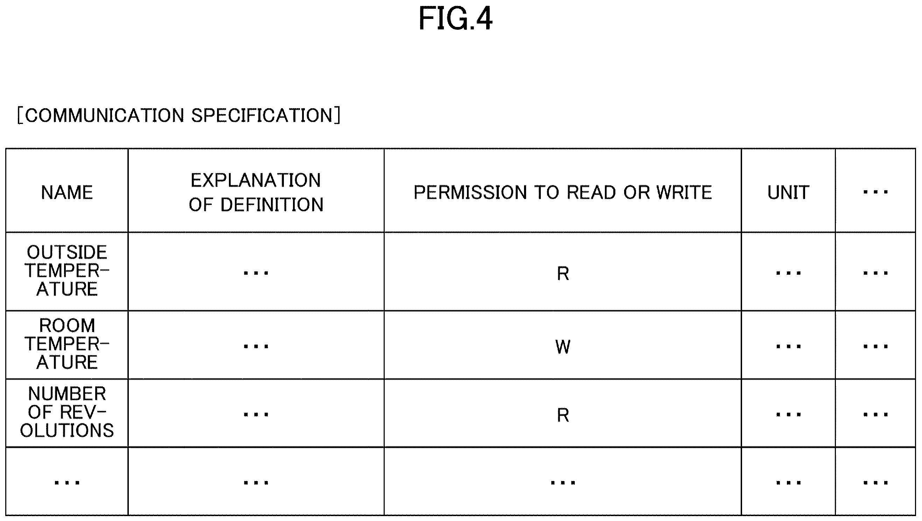

FIG. 4 is an example of a communication specification of a device according to an embodiment of the present disclosure. The communication specification of the device describes specifications when the device uses a communication protocol (for example, BACnet). The device data point acquisition unit 101 acquires descriptions relating to device data points from data of the communication specification as illustrated in FIG. 4. For example, a description relating to a device data point includes at least one of the name of the device data point, an explanation of a definition of the device data point, permission to read or write the device data point, a unit of the device data point, or the like. Although the communication specification is expressed in Japanese in FIG. 4, it may be expressed in any language such as English.

The description returns to FIG. 3.

The first extraction unit 102 extracts similar device data points from device data points of a plurality of devices. For example, an example in which similar device data points are extracted from device data points of the first device (device A) and the second device (device A') will be described. For example, the device A and the device A' are the same model (model a) but have different model numbers.

Specifically, the first extraction unit 102 extracts a common data point common to the plurality of devices (that is, extracts a device data point of the first device (device A) and a device data point of the second device (device A'), which are used as a common data point), based on whether a description relating to the device data point of the first device (device A) and a description relating to the device data point of the second device (device A') are similar to each other (for example, the description relating to the device data point of each of the first and second devices includes at least one of the name of the device data point, an explanation of a definition of the device data point, permission to read or write, or a unit of, the device data point, or the like).

For example, the first extraction unit 102 performs natural language processing on the names of device data points of the first device (device A) and the names of device data points of the second device (device A'), and extracts a common data point based on a similarity between the names of device data points (for example, a device data point of the first device (device A) and a device data point of the second device (device A') whose similarity is greater than or equal to a threshold value are set as a common data point).

For example, the first extraction unit 102 performs natural language processing on explanations of definitions of device data points of the first device (device A) and explanations of definitions of device data points of the second device (device A'), and extracts a common data point based on a similarity between explanations of definitions of device data points (for example, a device data point of the first device (device A) and a device data point of the second device (device A') whose similarity is greater than or equal to a threshold value are set as a common data point).

For example, the first extraction unit 102 performs natural language processing on permissions to read or write or units of device data points of the first device (device A) and permissions to read or write or units of device data points of the second device (device A'), and extracts a common data point based on a similarity between permissions to read or write or units of device data points (for example, a device data point of the first device (device A) and a device data point of the second device (device A') whose degree of match is greater than or equal to a threshold value are set as a common data point).

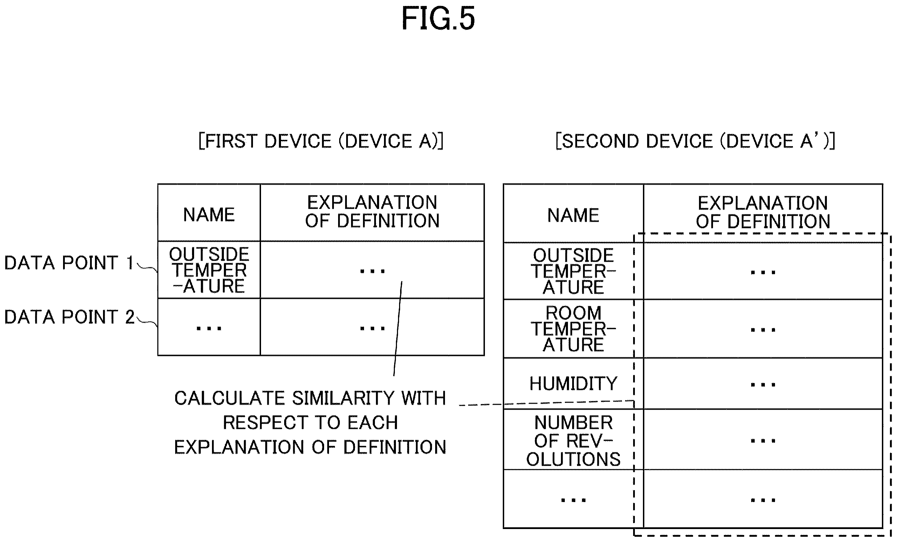

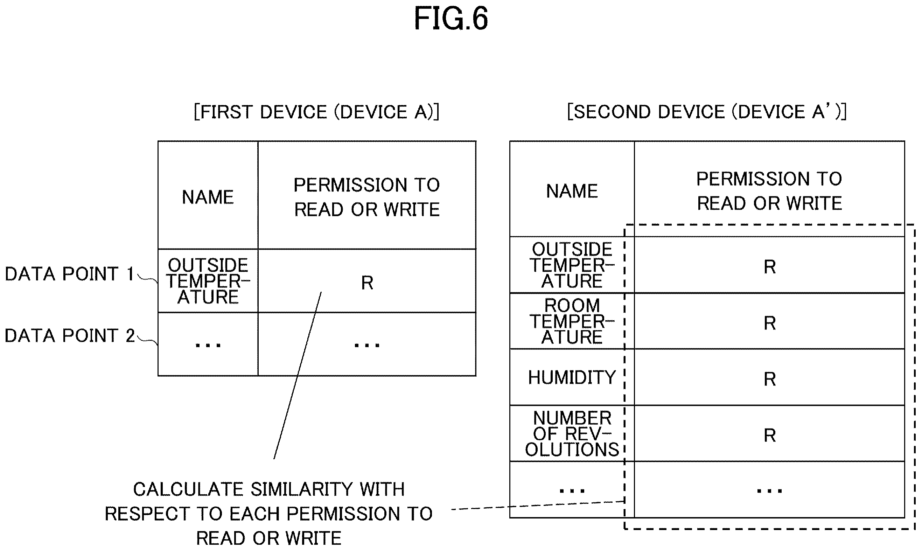

The determination of a similarity between device data points will be described in detail with reference to FIG. 5 and FIG. 6.

FIG. 5 is a diagram illustrating the determination of a similarity between explanations of definitions of device data points according to an embodiment of the present disclosure. The first extraction unit 102 calculates a similarity between an explanation of a definition of a certain device data point (for example, data point 1 in FIG. 5) of the first device (device A) and an explanation of a definition of each device data point of the second device (device A'). Next, the first extraction unit 102 calculates a similarity between an explanation of a definition of another device data point (for example, data point 2 in FIG. 5) of the first device (device A) and an explanation of a definition of each device data point of the second device (device A'). Similarly, the first extraction unit 102 calculates similarities with respect to all device data points of the first device (device A).

FIG. 6 is a diagram illustrating the determination of a similarity between permissions to read or write device data points according to an embodiment of the present disclosure. The first extraction unit 102 calculates a similarity between permission to read or write a certain device data point (for example, data point 1 in FIG. 6) of the first device (the device A) and permission to read or write each device data point of the second device (the device A'). Next, the first extraction unit 102 calculates a similarity between permission to read or write another device data point (for example, data point 2 in FIG. 6) of the first device (device A) and permission to read or write each device data point of the second device (device A'). Similarly, the first extraction unit 102 calculates similarities with respect to all device data points of the first device (device A).

As described, according to an embodiment of the present disclosure, device data points that are common (that is, similar) to a plurality of devices of the same model can be set as a common data point.

The description returns to FIG. 3.

The association information generation unit 103 generates information that associates device data points of a plurality of devices (that is, a device data point of the first device (device A) and a device data point of the second device (device A')), extracted as a common data point by the first extraction unit 102, with each other.

### [Association Information]

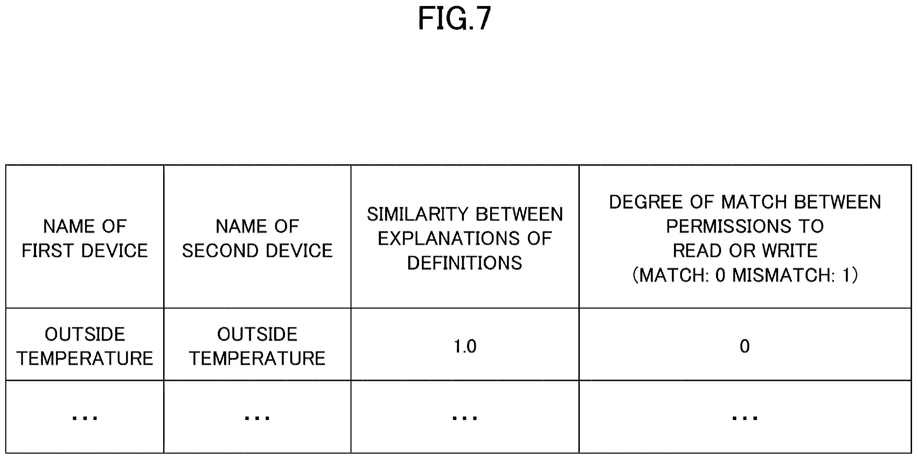

FIG. 7 is an example of association information (information generated by the association information generation unit 103) between device data points of a plurality of devices according to an embodiment of the present disclosure. Association information between device data points of a plurality of devices is information indicating a device data point of the first device and a device data point of the second device whose descriptions relating to the device data points are similar to each other (that is, information indicating which device data point of the first device and which device data point of the second device are similar to each other).

The description returns to FIG. 3.

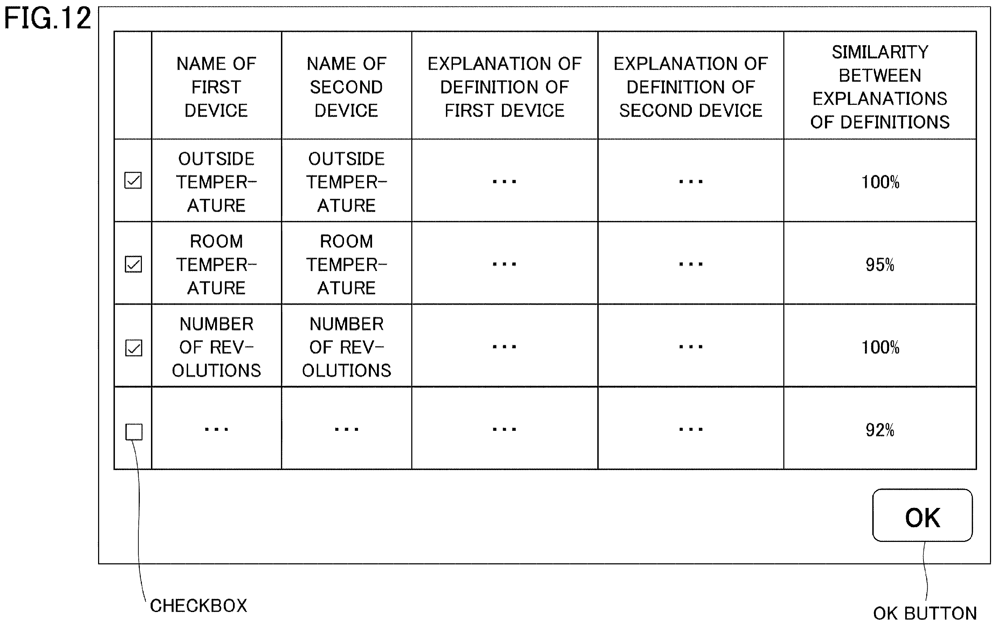

The association information generation unit 103 can display a common data point (that is, a device data point of the first device and a device data point of the second device, which are set as a common data point) on the user terminal 20 or the association information generation apparatus 10 (for example, the association information generation unit 103 can display a screen of FIG. 12), and receive an instruction to determine the common data point from a user. Further, the association information generation unit 103 can receive an instruction to output the common data point from the user, and output the common data point.

The association information generation unit 103 may generate a description relating to a common data point and generate information that associates device data points of a plurality of devices with each other. Specifically, the association information generation unit 103 can generate information that associates a description relating to a common data point with a description relating to a device data point of each of a plurality of devices. For example, the association information generation unit 103 may generate a description relating to a common data point in accordance with an instruction from the user, or may generate a description relating to a common data point based on a device data point of each of a plurality of devices or the like (without an instruction from the user). For example, the description relating to the common data point includes at least one of the name of the common data point, an explanation of a definition of the common data point, permission to read or write the common data point, a unit of the common data point, or the like. As described above, according to an embodiment of the present disclosure, a common data point common to a plurality of devices of the same model can be associated with a device data point of each of the plurality of devices. The association information generation unit 103 can output (for example, display on a screen, print, or transmit) information that associates the common data point with the device data point of each of the plurality of devices, or can store the information in any database (for example, a database in the association information generation apparatus 10).

Next, the [case of extracting a common data point similar to a device data point of a new device] will be described.

### [Case of Extracting Common Data Point Similar to Device Data Point of New Device]

The device data point acquisition unit 101 acquires descriptions relating to device data points of a device from a communication specification of the device.

For example, when a new device (third device (device X)) is added to the building management system that is already in operation, the device data point acquisition unit 101 acquires descriptions relating to device data points of the new device (third device (device X)). For example, the third device (device X) is the same model (model a) as the first device (device A) and the second device (device A'), but has a different model number.

The common data point acquisition unit 104 acquires descriptions relating to common data points (for example, common data points of the model a) stored in the common data point storage unit 106. For example, the user can designate a desired model.

The common data point storage unit 106 stores data of descriptions relating to common data points. As described above, the association information generation apparatus 10 may generate descriptions relating to common data points in accordance with an instruction from the user and store the descriptions relating to the common data points in the common data point storage unit 106, or may generate descriptions relating to common data points based on a device data point of each device or the like (without an instruction from the user) and store the descriptions relating to the common data points in the common data point storage unit 106.

### [Common Data Point]

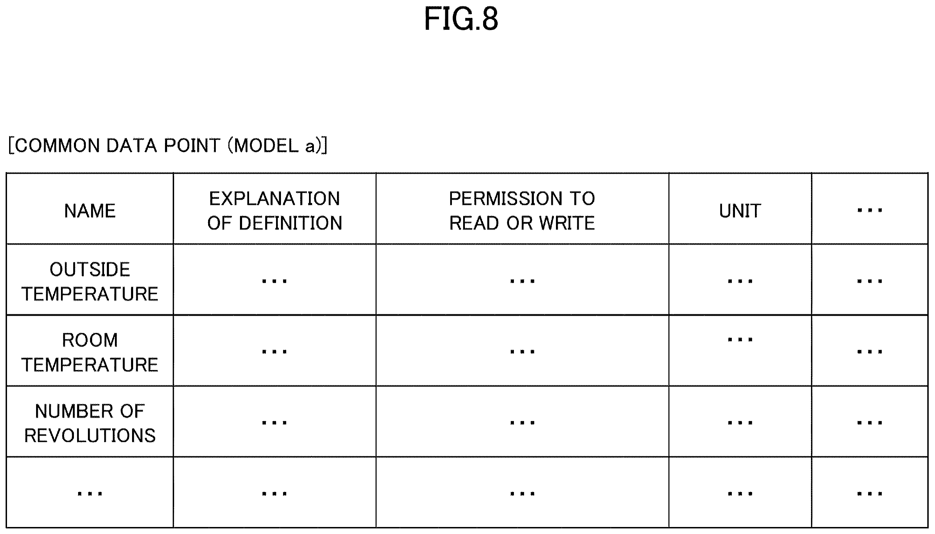

FIG. 8 is an example of descriptions relating to common data points (descriptions relating to common data points stored in the common data point storage unit 106) according to an embodiment of the present disclosure. In a specification of the building management system (BMS), descriptions relating to common data points are created for a plurality of devices (for example, for each model). For example, a description relating to a common data point includes at least one of the name of the common data point, an explanation of a definition of the common data point, permission to read or write the common data point, a unit of the common data point, or the like. Although the descriptions relating to the common data points are expressed in Japanese in FIG. 8, they may be expressed in any language such as English.

The description returns to FIG. 3.

The second extraction unit 105 extracts a common data point similar to a device data point of the third device (device X) based on whether a description relating to the common data point and a description relating to the device data point of the third device (device X) are similar to each other (for example, the description relating to each of the common data point and the device data point includes at least one of a name, an explanation of a device definition, permission to read or write, a unit, or the like).

For example, the second extraction unit 105 performs natural language processing on the names of device data points of the third device (device X) and the names of common data points, and extracts a common data point similar to a device data point of the third device (device X) based on a similarity between the names of the common data point and the device data point (for example, extracts a common data point whose similarity is greater than or equal to a threshold value).

For example, the second extraction unit 105 performs natural language processing on explanations of definitions of device data points of the third device (device X) and explanations of definitions of common data points, and extracts a common data point similar to a device data point of the third device (device X) based on a similarity between explanations of definitions of the common data point and the device data point (for example, extracts a common data point whose similarity is greater than or equal to a threshold value).

For example, the second extraction unit 105 performs natural language processing on permissions to read or write or units of device data points of the third device (device X) and permissions to read or write or units of common data points, and extracts a common data point similar to a device data point of the third device (device X) based on a similarity between permissions to read or write or units of the common data point and the device data point (for example, extracts a common data point whose degree of match is greater than or equal to a threshold value).

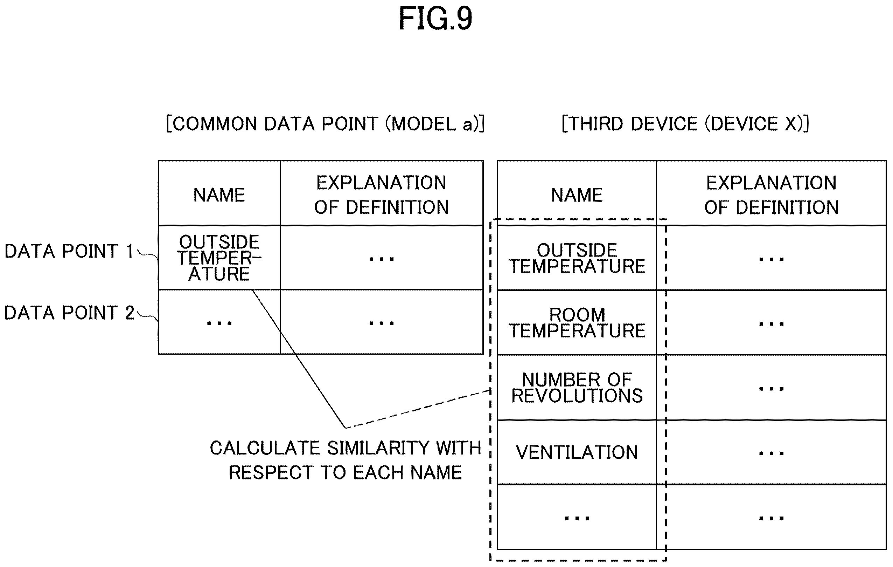

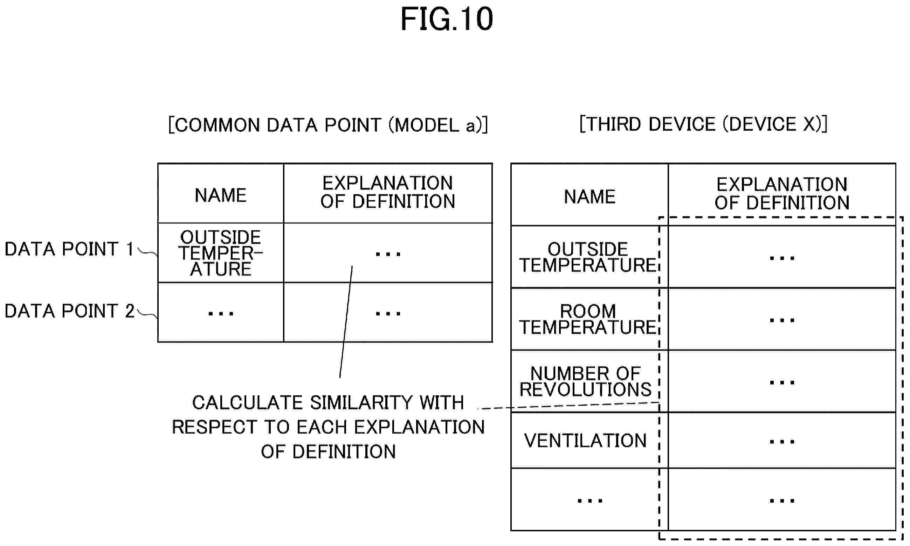

The determination of a similarity between a common data point and a device data point will be described in detail with reference to FIG. 9 and FIG. 10.

FIG. 9 is a diagram illustrating the determination of a similarity between the name of a common data point and the name of a device data point according to an embodiment of the present disclosure. The second extraction unit 105 calculates a similarity between the name of a certain common data point (for example, data point 1 in FIG. 9) and the name of each device data point of the third device (the device X). Next, the second extraction unit 105 calculates a similarity between the name of another common data point (for example, data point 2 in FIG. 9) and the name of each device data point of the third device (the device X). Similarly, the second extraction unit 105 calculates similarities with respect to all common data points.

FIG. 10 is a diagram illustrating the determination of a similarity between permission to read or write a common data point and permission to read or write a device data point according to an embodiment of the present disclosure. The second extraction unit 105 calculates permission to read or write a certain common data point (for example, data point 1 in FIG. 10) and permission to read or write each device data point of the third device (the device X). Next, the second extraction unit 105 calculates a similarity between permission to read or write another common data point (for example, data point 2 in FIG. 10) and permission to read or write each device data point of the third device (the device X). Similarly, the second extraction unit 105 calculates similarities with respect to all common data points.

As described above, according to an embodiment of the present disclosure, when a new device is added to the building management system (BMS), a common data point similar to a device data point of the new device may be selected from among common data points for the model of the new device.

The description returns to FIG. 3.

The association information generation unit 103 generates information that associates a common data point with a device data point of the third device (device X). The association information generation unit 103 can output (for example, display on a screen, print, or transmit) the information that associates the common data point and the device data point of the third device with each other, or store the information in any database (for example, a database in the association information generation apparatus 10). The association information generation unit 103 can output the common data point (that is, the common data point associated with the device data point of the third device (device X)).

### [Association information]

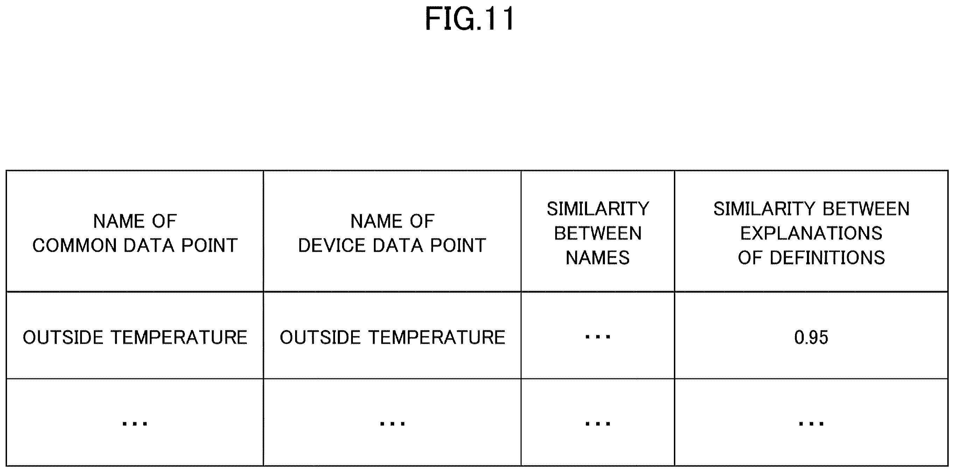

FIG. 11 is an example of association information (information generated by the association information generation unit 103) between a common data point and a device data point according to an embodiment of the present disclosure. The association information between the common data point and the device data point is information indicating a common data point and a device data point of the third device whose descriptions relating to the data points are similar to each other (that is, information indicating which common data point and which device data point of the third device are similar to each other).

### <Example of Screen>

FIG. 12 is an example of a screen displayed on the user terminal 20 or the association information generation apparatus 10 according to an embodiment of the present disclosure. The association information generation apparatus 10 displays a common data point common to a plurality of devices (the first device and the second device in the example of FIG. 12) on the user terminal 20 or the association information generation apparatus 10. For example, a list of the names of device data points of the plurality of devices, explanations of definitions of the device data points of the plurality of devices, and similarities between the explanations of the definitions is displayed.

The user can determine a common data point by selecting a checkbox of the common data point as illustrated in FIG. 12. Further, the user can output common data points selected with checkboxes by selecting an OK button in FIG. 12 (for example, data of a list of the common data points is output).

### <Method>

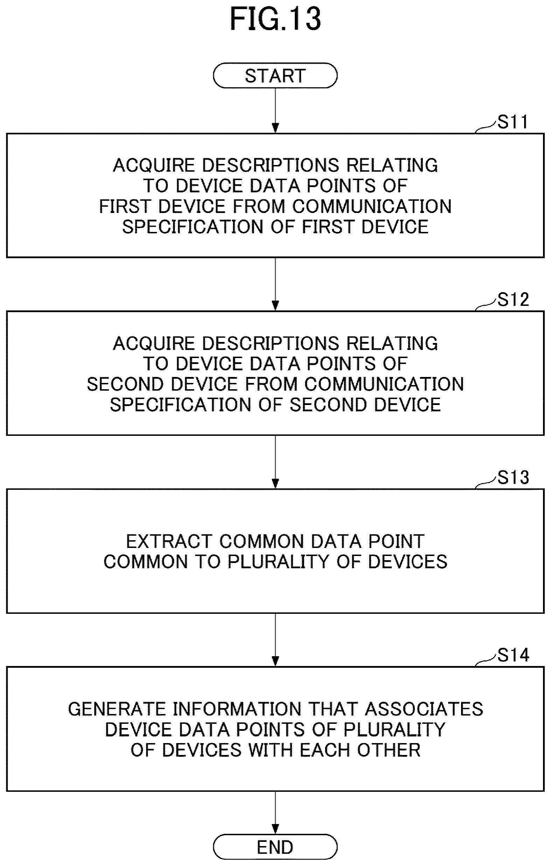

FIG. 13 is a flowchart of a process of associating device data points of a plurality of devices with each other according to an embodiment of the present disclosure.

In step 11 (S11), the association information generation apparatus 10 acquires descriptions relating to device data points of the first device from a communication specification of the first device.

In step 12 (S12), the association information generation apparatus 10 acquires descriptions relating to device data points of the second device from a communication specification of the second device.

In step 13 (S13), the association information generation apparatus 10 extracts a common data point common to a plurality of devices (that is, the first device and the second device) (that is, the association information generation apparatus 10 extracts a device data point of the first device and a device data point of the second device, which are used as a common data point), based on whether a description relating to the device data point of the first device, among the descriptions relating to the device data points acquired in S11, and a description relating to the device data point of the second device, among the descriptions relating to the device data points acquired in S12, are similar to each other.

In step 14 (S14), the association information generation apparatus 10 generates information that associates the device data points of the plurality of devices (that is, the device data point of the first device and the device data point of the second device) with each other.

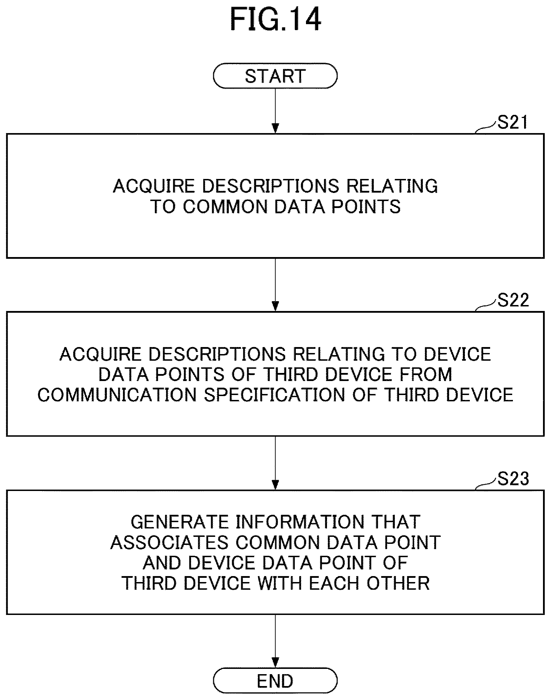

FIG. 14 is a flowchart of a process of associating a common data point and a device data point with each other according to an embodiment of the present disclosure.

In step 21 (S21), the association information generation apparatus 10 acquires descriptions relating to common data points.

In step 22 (S22), the association information generation apparatus 10 acquires descriptions relating to device data points of the third device from a communication specification of the third device.

The order of S21 and S22 may be reversed, or S21 and S22 may be performed simultaneously.

In step 23 (S23), the association information generation apparatus 10 generates information that associates a common data point and a device data point of the third device with each other based on whether a description relating to the common data point and a description relating to the device data point of the third device are similar to each other.

As described above, according to an embodiment of the present disclosure, there is provided an association information generation apparatus 10 including a controller 1001 configured to generate association information in a building management system, wherein the controller 1001 is configured to: acquire a description relating to a device data point of a first device from a communication specification of the first device; acquire a description relating to a device data point of a second device from a communication specification of the second device; extract a common data point common to a plurality of devices, the plurality of devices being the first device and the second device, based on whether the description of the device data point of the first device and the description of the device data point of the second device are similar to each other; and generate information that associates the device data points of the plurality of devices with each other. Accordingly, devices can be easily set in the building management system. Furthermore, in a conventional method in which a person confirms content described in a BACnet communication specification or the like of each device and selects a data point common to devices, it would take time and effort and also an interpretation error or a misunderstanding of a sentence in the communication specification would occur. However, according to an embodiment of the present disclosure, a data point common to devices can be accurately selected.

Preferably, the controller 1001 is configured to generate a description relating to the common data point, and generate the information that associates the device data points of the plurality of devices with each other. Accordingly, the common data point and each of the device data points of the devices can be associated with each other in the building management system.

Preferably, the description relating to the device data point includes a name of the data point, and the controller 1001 is configured to extract the common data point based on a similarity between a name of the device data point of the first device and a name of the device data point of the second device. Accordingly, the device data points whose names are similar to each other can be set as the common data point.

Preferably, the description relating to the device data point includes an explanation of a definition of the data point, and the controller 1001 is configured to extract the common data point based on a similarity between an explanation of a definition of the device data point of the first device and an explanation of a definition of the device data point of the second device. Accordingly, the device data points whose explanations of the definitions are similar to each other can be set as the common data point.

Preferably, the controller 1001 is configured to display the common data point on a user terminal 20 or the association information generation apparatus 10, and receive an instruction to determine the common data point from a user. Accordingly, after the user confirms the extracted common data point, the user can determine the common data point.

Preferably, the controller 1001 is configured to receive an instruction to output the common data point from the user, and output the common data point. Accordingly, the user can acquire the extracted common data point.

Preferably, the description relating to the device data point includes permission to read or write, or a unit of, the data point, and the controller 1001 is configured to extract the common data point based on a similarity between permission to read or write, or a unit of, the device data point of the first device and permission to read or write, or a unit of, the device data point of the second device. Accordingly, the device data points whose permissions to read or write or whose units are similar to each other can be set as the common data point.

Preferably, the controller 1001 is configured to output or store, in a database, information that associates the common data point and each of the device data points of the plurality of devices with each other. Accordingly, another user can use the association information.

Preferably, the controller 1001 is configured to acquire a description relating to the common data point, acquire a description relating to a device data point of a third device from a communication specification of the third device, and generate information that associates the common data point and the device data point of the third device with each other based on whether the description relating to the common data point and the description relating to the device data point of the third device are similar to each other. Accordingly, in a case where a new device is added to the building management system, the new device can be easily configured.

Preferably, the controller 1001 is configured to generate the information that associates the common data point and the device data point of the third device with each other based on a similarity between a name of the common data point and a name of the device data point of the third device. Accordingly, the device data point of the third device, having the name similar to that of the common data point, can be associated with the common data point.

Preferably, the controller 1001 is configured to generate the information that associates the common data point and the device data point of the third device with each other based on a similarity between an explanation of a definition of the common data point and an explanation of a definition of the device data point of the third device. Accordingly, the device data point of the third device, having the explanation of the definition similar to that of the common data point, can be associated with the common data point.

Preferably, the controller 1001 is configured to output the common data point. Accordingly, the common data point associated with the device data point of the third device can be acquired.

Preferably, the controller 1001 is configured to generate the information that associates the common data point and the device data point of the third device with each other based on a similarity between permission to read or write, or a unit of, the common data point and permission to read or write, or a unit of, the device data point of the third device. Accordingly, the device data point of the third device, having the permission to read or write or the unit similar to that of the common data point, can be associated with the common data point.

Preferably, the controller 1001 is configured to output or store, in a database, the information that associates the common data point and the device data point of the third device with each other. Accordingly, another user can use the association information.

According to an embodiment of the present disclosure, a system 1 including: an association information generation apparatus 10 including a controller 1001 configured to generate association information in a building management system; and a user terminal 20 is provided. The controller 1001 of the association information generation apparatus 10 is configured to acquire a description relating to a device data point of a first device from a communication specification of the first device; acquire a description relating to a device data point of a second device from a communication specification of the second device; extract a common data point common to a plurality of devices, the plurality of devices being the first device and the second device, based on whether the description of the device data point of the first device and the description of the device data point of the second device are similar to each other; and generate information that associates the device data points of the plurality of devices with each other.

According to an embodiment of the present disclosure, there is provided a method executed by an association information generation apparatus 10 configured to generate association information in a building management system, the method including a step of acquiring a description relating to a device data point of a first device from a communication specification of the first device; a step of acquiring a description relating to a device data point of a second device from a communication specification of the second device; a step of extracting a common data point common to a plurality of devices, the plurality of devices being the first device and the second device, based on whether the description of the device data point of the first device and the description of the device data point of the second device are similar to each other; and a step of generating information that associates the device data points of the plurality of devices with each other.

According to an embodiment of the present disclosure, there is provided a program for causing an association information generation apparatus 10 configured to generate association information in a building management system to execute a process including: acquiring a description relating to a device data point of a first device from a communication specification of the first device; acquiring a description relating to a device data point of a second device from a communication specification of the second device; extracting a common data point common to a plurality of devices, the plurality of devices being the first device and the second device, based on whether the description of the device data point of the first device and the description of the device data point of the second device are similar to each other; and generating information that associates the device data points of the plurality of devices with each other.

Although the embodiments have been described above, it should be understood that various changes in the form and details can be made without departing from the spirit and scope of the claims.

This international application is based on and claims priority to Japanese Patent Application No. 2023-059605, filed on March 31, 2023, the entire contents of which are incorporated herein by reference.

### DESCRIPTION OF THE REFERENCE NUMERALS

1 association information generation system
10 association information generation apparatus
20 user terminal
101 device data point acquisition unit
102 first extraction unit
103 association information generation unit
104 common data point acquisition unit
105 second extraction unit
106 common data point storage unit
1001 controller
1002 main storage unit
1003 auxiliary storage unit
1004 input unit
1005 output unit
1006 interface unit

## Claims

1. An association information generation apparatus comprising:
a controller configured to generate association information in an information building management system, wherein
the controller is configured to:
acquire a description relating to a device data point of a first device from a communication specification of the first device;
acquire a description relating to a device data point of a second device from a communication specification of the second device;
extract a common data point common to a plurality of devices, the plurality of devices being the first device and the second device, based on whether the description of the device data point of the first device and the description of the device data point of the second device are similar to each other; and
generate information that associates the device data points of the plurality of devices with each other.

2. The association information generation apparatus according to claim 1, wherein the controller is configured to generate a description relating to the common data point, and generate the information that associates the device data points of the plurality of devices with each other.

3. The association information generation apparatus according to claim 1 or 2, wherein
the description relating to the device data point includes a name of the data point, and
the controller is configured to extract the common data point based on a similarity between a name of the device data point of the first device and a name of the device data point of the second device.

4. The association information generation apparatus according to any one of claims 1 to 3, wherein
the description relating to the device data point includes an explanation of a definition of the data point, and
the controller is configured to extract the common data point based on a similarity between an explanation of a definition of the device data point of the first device and an explanation of a definition of the device data point of the second device.

5. The association information generation apparatus according to any one of claims 1 to 4, wherein the controller is configured to display the common data point on a user terminal or the association information generation apparatus, and receive an instruction to determine the common data point from a user.

6. The association information generation apparatus according to any one of claims 1 to 5, wherein the controller is configured to receive an instruction to output the common data point from the user, and output the common data point.

7. The association information generation apparatus according to any one of claims 1 to 6, wherein
the description relating to the device data point includes permission to read or write, or a unit of, the data point, and
the controller is configured to extract the common data point based on a similarity between permission to read or write, or a unit of, the device data point of the first device and permission to read or write or a unit of the device data point of the second device.

8. The association information generation apparatus according to any one of claims 1 to 7, wherein the controller is configured to output or store, in a database, information that associates the common data point and each of the device data points of the plurality of devices with each other.

9. The association information generation apparatus according to claim 1, wherein
the controller is configured to
acquire a description relating to the common data point,
acquire a description relating to a device data point of a third device from a communication specification of the third device, and
generate information that associates the common data point and the device data point of the third device with each other based on whether the description relating to the common data point and the description relating to the device data point of the third device are similar to each other.

10. The association information generation apparatus according to claim 9, wherein the controller is configured to generate the information that associates the common data point and the device data point of the third device with each other based on a similarity between a name of the common data point and a name of the device data point of the third device.

11. The association information generation apparatus according to claim 9 or 10, wherein the controller is configured to generate the information that associates the common data point and the device data point of the third device with each other based on a similarity between an explanation of a definition of the common data point and an explanation of a definition of the device data point of the third device.

12. The association information generation apparatus according to any one of claims 9 to 11, wherein the controller is configured to output the common data point.

13. The association information generation apparatus according to any one of claims 9 to 12, wherein the controller is configured to generate the information that associates the common data point and the device data point of the third device with each other based on a similarity between permission to read or write, or a unit of, the common data point and permission to read or write, or a unit of, the device data point of the third device.

14. The association information generation apparatus according to any one of claims 9 to 13, wherein the controller is configured to output or store, in a database, the information that associates the common data point and the device data point of the third device with each other.

15. A system comprising:
an association information generation apparatus including a controller configured to generate association information in a building management system; and
a user terminal, wherein
the controller of the association information generation apparatus is configured to
acquire a description relating to a device data point of a first device from a communication specification of the first device;
acquire a description relating to a device data point of a second device from a communication specification of the second device;
extract a common data point common to a plurality of devices, the plurality of devices being the first device and the second device, based on whether the description of the device data point of the first device and the description of the device data point of the second device are similar to each other; and
generate information that associates the device data points of the plurality of devices with each other.

16. A method executed by an association information generation apparatus configured to generate association information in a building management system, the method comprising:
a step of acquiring a description relating to a device data point of a first device from a communication specification of the first device;
a step of acquiring a description relating to a device data point of a second device from a communication specification of the second device;
a step of extracting a common data point common to a plurality of devices, the plurality of devices being the first device and the second device, based on whether the description of the device data point of the first device and the description of the device data point of the second device are similar to each other; and
a step of generating information that associates the device data points of the plurality of devices with each other.

17. A program for causing an association information generation apparatus configured to generate association information in a building management system to execute a process comprising:
acquiring a description relating to a device data point of a first device from a communication specification of the first device;
acquiring a description relating to a device data point of a second device from a communication specification of the second device;
extracting a common data point common to a plurality of devices, the plurality of devices being the first device and the second device, based on whether the description of the device data point of the first device and the description of the device data point of the second device are similar to each other; and
generating information that associates the device data points of the plurality of devices with each other.
